# EUROPEAN PATENT APPLICATION

(11) **EP 4 467 694 A1**
(43) Date of publication of application: **27.11.2024**
(21) Application number: 24155295.9
(22) Date of filing: 01.02.2024
(51) Int. Cl.: D02G 3/44, D03D 15/513

(54) **FIREPROOF, FIRE-RESISTANT, AND FLAME-RETARDANT TEXTILE MATERIAL**

(30) Priority: 25.05.2023 ES 202330417
(71) Applicant: Tejidos Royo, S.L., 46220 Picassent (Valencia) (ES)
(72) Inventor: CASANOVA ROYO, José Ignacio, 46220 Picassent (Valencia) (ES)
(74) Representative: Ibarra Garcia, Isabel

(57) **Abstract**

The present invention relates to a fireproof, fire-resistant, and flame-retardant textile material obtained from yarns formed by a continuous filament with a fiber count of between 22 dTex and 440 dTex and with a breaking strength of between 5 cN/Tex and 75 cN/Tex. The surface of the continuous filament forming the yarns is covered with recycled fibers or yarns with recycled fibers, the composition of which contains at least 20% of recycled fibers which are mixed with virgin fibers with fireproof, fire-resistant, and flame-retardant properties. Therefore, the yarns constituting the textile material of the invention have a tenacity of at least 10.5 cN/Tex, which ensures the tensile, abrasion, and tear strengths required by current regulations, being a material that complies with sustainability directives.

## Description

### FIELD OF THE ART

The present invention relates to a fireproof textile material and more specifically to fireproof, flame-retardant technical fabrics obtained from yarns containing at least 20% of recycled fibers or yarns with recycled fibers which enable compliance with the new European and international directives in terms of eco-design, within the new model of circular economy of textiles.

The objective of the present invention is to ensure the tensile and tear strengths required by current regulations (EN ISO 11612 and/or EN ISO 11611) for fireproof, flame-retardant, FR fabrics (where FR stands for fire-resistant) manufactured with yarns with at least 20% or more of recycled fibers originating from pre-consumer and post-consumer recycled textile materials, and to thereby allow compliance with the European directive and regulations.

### BACKGROUND OF THE INVENTION

For the manufacture of the well-known fireproof, flame-retardant technical fabrics intended for making clothing for personal protective equipment, commonly known as PPE, with CE (*Conformité Européenne*) certification, these fabrics are required to be certified under the following standards: EN ISO 11612:2015 Fabrics and materials for protective clothing against heat and flame and/or EN ISO 11611:2015 Protective clothing for use in welding and allied processes.

To overcome the criteria of said standards, it is required to achieve high tensile strength and tear strength values, for this reason 2-ply yarns with minimum strength values of 10.5 cN/Tex are used. It is also necessary to use a long fiber length greater than 50 mm and in the case of using a natural fiber such as cotton, a combing and re-combing process must be applied to obtain the longest fibers possible and remove short fibers, in some cases Egyptian cotton fibers are used due to their greater length, and a minimum number of fibers are used per cross section or circular section.

The minimum tensile strength and tear strength values required by the mentioned standards are described in detail below:

### EN ISO 11612

ISO 13934-1 Tensile properties of fabrics - Part 1: Determination of maximum force and elongation at maximum force using the strip method, the minimum required value of which is 300 N.

ISO 13937-2 Tensile properties of fabrics - Part 2: Determination of maximum force by means of the tear method, the minimum required value of which is 15 N.

### EN ISO 11611

ISO 13934-1 Tensile properties of fabrics - Part 1: Determination of maximum force and elongation at maximum force using the strip method, the minimum required value of which is 400 N.

ISO 13937-2 Tensile properties of fabrics - Part 2: Determination of maximum force by means of the tear method, the minimum required value of which is 20 N.

The current context of climate emergency has propelled the main world organizations, countries, and particularly the European Union, to set the objectives of implementing policies aimed at eradicating CO₂ and greenhouse gas emissions. For this reason, a timetable in which said directives will come into force progressively and by law in 2025 has been approved.

One of the main European objectives is to promote and implement a circular economy model that replaces and eradicates the past linear economy model of single-use products and materials. The new European and international directives are focused and based on textile product sustainability.

Sustainability is understood to mean the development of fabrics and clothing based on eco-design, i.e., from recycled and/or reusable materials.

Proximity production and logistics, the reduction of CO₂ in the production process (carbon footprint), the use of green energy, and the minimum use of water resources will also be promoted.

In conclusion, with the new directives and regulations, it is required to market textile garments that are manufactured with fabrics containing at least 20% of recycled materials, and these materials can in turn be recovered, reprocessed, and used to make fabrics again, preferably for the same application at the end of their life cycle.

With this new paradigm, the technical challenge consists of overcoming the minimum parameters required in relation to the mentioned standards in terms of tensile strength, tear strength, and abrasion strength of fabrics.

With conventional methods and technologies using 20% or more of recycled fibers, and with known fiber blends and conventional spinning technology, and taking into account the standards required for protection, comfort, and ergonomics demanded in the CE garment certification process, for example, for personal protective equipment PPE, it is technically impossible to achieve the required parameters.

In view of this scenario, the applicant of the present invention detects the need to develop a fireproof, fire-resistant, and flame-retardant textile material containing at least 20% of recycled fibers in order to achieve the parameters required in the mentioned regulations, and additionally offering optimum mechanical properties.

### DESCRIPTION OF THE INVENTION

The proposed textile material resolves in a completely satisfactory manner the problems set forth above, based on an extremely effective solution using fibers originating from the recycling of pre-consumer textile material (textile material originating from fabric manufacturing or from garment production scraps, before being used by the consumer) and post-consumer textile material (textile material originating from fabrics or garments after being used by the consumer).

The fireproof, fire-resistant, and flame-retardant textile material of the present invention is formed by yarns containing recycled fibers originating from a textile material, such that the yarns furthermore contain a continuous filament with a fiber count of between 22 dtex and 440 dtex and with a breaking strength of between 5 cN/Tex and 75 cN/Tex.

The advantage of the textile material of the invention lies in the fact that the surface of the continuous filament forming the yarns is covered with recycled fibers or yarns with recycled fibers, the composition of which contains at least 20% of recycled fibers which are mixed with virgin fibers with fireproof, fire-resistant, and flame-retardant properties. Therefore, the yarns constituting the textile material of the invention have a tenacity of at least 10.5 cN/Tex. Preferably, the yarns have an LOI (Limiting Oxygen Index) of between 20 and 50.

Optionally, the mixture of fibers externally covering each continuous filament of the textile material of the invention is made up of a mixture of recycled fibers and virgin fibers of natural, artificial, and/or synthetic origin with fireproof or flame-retardant properties. In this sense, the fibers covering the surface of the continuous filament are preferably a mixture of recycled fibers and virgin fibers selected from: modacrylic, meta-aramid, para-aramid, polyamide-imide, polyacrylate, polyacrylonitrile, PBI (polybenzimidazole), PBO (polyparaphenylene benzobisoxazole), FR viscose, FR modal (where FR stands for fire-resistant), carbon, preox (oxidized polyacrylonitrile fiber), chlorinated, wool, cotton, lyocell, polyamide, polyester, regenerated cellulose, and recycled cellulose fibers.

Moreover, the virgin fibers externally covering each continuous filament of the yarns forming the textile material are preferably cut with a length of between 38 mm and 55 mm.

Likewise, it should be mentioned that the continuous filament of the yarn which is part of the textile material has a composition selected from: para-aramids, meta-aramids, polyamides, polyesters, polyethylene, polypropylene, PBO, elastomultiester, elastanes, artificial celluloses. Said continuous filament of the yarn is parallel, textured, twisted, assembled, and/or braided, and can be elastic or rigid.

Moreover, the yarn forming the textile material of the invention preferably has a number of turns per meter of yarn (twist per meter) in accordance with the twist constant between values of 75 kt and 150 kt.

Furthermore, it should be mentioned that the covering of the continuous filament of the yarns of the textile material of the invention is preferably arranged with a single helical cover or a double helical cover.

Therefore, the textile material of the present invention is obtained preferably as a woven fabric, preferably with weaves, 3/1, 2/1 twill, 1/1, 2/1, 2/2 taffeta, sateen, double fabrics, ripstop. In the context of the present invention, ripstop fabrics are those anti-tear fabrics which incorporate thicker, high-strength yarns in their weave. It could also be obtained as a circular-knitted, woven, keten, or multiaxial fabric.

The present invention improves garment durability since the fabrics are also more resistant to abrasion, prolonging the service life of the garment, and therefore increasing the sustainability factor. Therefore, in fabrics formed by the textile of the present invention, dimensional stability is improved, allowing optimum and energy-efficient industrial washing processes.

Furthermore, the developed invention allows obtaining recycled colors, particularly high-visibility yellow and high-visibility orange, with a % of recycled fibers, as a result of the innovative mixing and homogenization process that allows pasar the color coordinates required by the standard EN ISO 20471 Fabric and material requirements in protective garments for high visibility.

The steps followed in making the textile material of the invention are described in detail below:

### Step 1: treatment of recycled fiber

Once the used garments (post-consumer) and the fabric originating from manufacturing and from garment production scraps (pre-consumer) are received, the first operation which consists of sorting the material by colors and compositions is performed, then the material is recycled by mechanical means and passed through a recycling machine with different cutting boxes that tear the fabric into pulled rags and subsequently convert them into waste fiber.

The quality of the waste fibers obtained in the mechanical recycling process is much lower than the quality of an original virgin fiber, the most affected values are the fiber length, the uniformity of the fiber length, the regularity, and of course the fiber strength.

### Step 2: Analysis

Once the waste fiber originating from used garments (post-consumer) and from fabric originating from manufacturing and garment production scraps (pre-consumer) is obtained, a percentage analysis of the recycled waste fiber is performed in which the percentage composition and the main physical and chemical characteristics, particularly the fiber length, fiber fineness (expressed as µ or microner), LOI (Limiting Oxygen Index), batch registration, and identification data, are determined, supported by an analytical test or run using chemical processes, reagents, distillation process, pyrolysis test and analysis of emitted gases, data color colorimeter, and spectrophotometry equipment.

### Step 3: Metering

After the process of tearing the textile material as it passes through the recycling machine and percentage analysis, the different recycled waste textile fibers obtained are stored in isolated silos that later feed a fiber percentage metering device, with a weighing system that ensures a high precision of up to 1% of fiber composition in the mixture.

Finally, said recycled fibers or waste textile are deposited in an exact percentage in the fiber preparation and mixing phase to achieve the optimum mixing and homogenization percentage of the recycled fibers together with virgin fibers.

### Step 4: Traceability

Inorganic tracers are applied which are deposited in each batch to ensure the traceability of each batch from: the origin of the recycled garments and characteristics of the integrating fibers, industrial processes and parameters of the entire industrial process and applied recipes. These fiber tracers can be detected by a scanner when scanning the fabric of newly produced garments.

Said tracers are integrated into selected fibers which are characterized by having magnetic and electronic properties, behaving like a beacon, as they allow monitoring the batches produced, providing suitable data to generate models that can be processed with artificial intelligence and bigdata technology, becoming a digital asset within the concept of industry 4.0.

As a result of this data, it is possible to provide feedback and improve both industrial processes and future eco-designs. Said technology can be linked to blockchain technology.

### Step 5: Mixing

From the resulting fiber count or yarn number to be spun, a formula which allows calculating the required LOI (Limiting Oxygen Index), tensile strength, and tear strength, as well as the pilling index and abrasion strength, is applied.

Based on this result, the desired high-precision percentage mixing with recycled fiber and the subsequent homogenization process of the resulting mixture with cut virgin fibers of 38 mm to 55 mm are performed.

With this high-precision metering and homogenization technique, mixtures of nude color or any range of high-precision or calibrated solid colors are achieved, which allows obtaining pantone and high-visibility colors with colorimetric calibration, not achieved with fabric recycling processes to date. At the same time, homogenization of the mixture in the desired percentages is obtained in order to be able to proceed to the next carding operation of the mixture.

### Step 6: Stretching and Twisting

In order to parallelize and achieve the required final yarn thickness or fiber count, the relevant combing and stretching parallelization steps are performed. When using cut fibers with different cut lengths, it is necessary to use mixed hybrid trimmings, as well as more precise and self-regulating gauges that ensure a better cohesion and interfibrillar interaction.

### Step 7: Insulation of the insulated room installation (sealed room)

It is essential to perform spinning in a completely sealed insulated room equipped with an air supply and filtration system, with temperature and humidity control, that ensures the avoidance of traces of other fibers and/or cross-contamination between batches, and therefore a high-precision homogeneous mixture in the yarn in terms of mixture regularization, actual percentage composition, and tracer applied in the mixture.

### Step 8: Technical yarns

The technical yarn or yarns are made from a yarn of continuous filament and the surface of this yarn of continuous filament is covered with a homogeneous mixture of cut fibers, this homogenous mixture being composed of recycled fibers and virgin fibers, these yarns being characterized in that the continuous filament is arranged in the center of the yarn and the homogeneous mixture of virgin and recycled cut fibers is arranged on the outside, i.e., on the surface of this yarn.

The continuous filament of the yarn can be rigid, elastic, or a mixture of both, and can also be a recycled copolymer.

The surface of the mentioned filaments are covered with mixtures of cut virgin fibers having a length comprised between 30 mm and 55 mm and of recycled fibers, with a content of recycled fibers originating from post-consumer garments and/or from pre-consumer fabrics in the mixture of at least of 20% and being able to reach a higher percentage.

The virgin fiber can be of different natural, artificial, or synthetic origins and preferably inherently fireproof.

The continuous filament which the yarn comprises is a continuous filament having a high tenacity of at least 5 cN/Tex, being able to be in some cases of recycled copolymer and said filament being covered externally by said mixture of fibers containing in part recycled fibers and virgin fibers.

Furthermore, at least 0.15% of fibers for indicating the traceability of each production batch are always included in said mixture of covering fibers.

The fiber count used for the continuous filament can vary from 22 dTex to 440 dTex according to the resulting yarn, with a yarn tenacity or breaking strength of 5 to 75 cN/Tex.

The spinning frame is equipped with creels prepared to enable spinning these technical yarns and thereby to ensure constant stretching and high-precision centering of the yarns of continuous filaments in the center of the yarn. The continuous filament requires prior preparation with a special spool format by applying high-precision rewinding, crossover angle, compression, and spool length.

The continuous filament can be formed by parallel filaments, but it can also be textured, twisted, or braided, and as a result of its characteristics, it can also be rigid, elastic or a combination of both and even a recycled copolymer.

The surface of said continuous filament of the resulting technical yarn is covered with a mixture of fibers with at least 20% of fibers originating from recycling and the remaining 80% from natural, artificial, and synthetic inherently fireproof virgin fibers with an LOI *(*Limiting Oxygen Index*)* comprised between 20 and 50, where LOI is understood as the minimum oxygen concentration in percentage which will support the combustion of a fiber mixture.

Furthermore, these fibers covering the surface of the continuous filament can be in the original color of the fibers or in dyed colors, mass dyed fiber colors (blue, black, gray, etc.) or high-visibility mass dyed fiber colors (yellow, orange, and red), colors which can be calibrated and adjusted to pantone colors and shades as a result of the precision in metering the resulting mixture.

The twist per meter of the yarn is in accordance with a twist constant with values of 75 kt to 150 kt (turns per meter of yarn).

In some cases, the resulting yarn can be subjected to a twisting process to obtain a 2-ply or 3-ply yarn.

Vaporization at 60ºC in vacuum and conditioned like in the step prior to weaving is applied to the resulting yarn.

The essence of the invention lies in the fact that the fabrics for making fireproof or flame-retardant PPE garments are made up of yarns manufactured from a continuous filament, which yarns can be parallel or have a twist, where they can textured, twisted, or braided, with mechanical properties of being rigid, elastic, or combination of both, and in some case a recycled copolymer, and the surface covering the continuous filament is formed by a mixture of fibers with at least 20% originating from preferably fireproof recycled fibers and the remaining from natural, artificial, or synthetic inherently fireproof fibers with an LOI *(*Limiting Oxygen Index*)* comprised between 25 and 50.

The resulting yarns have a tenacity of at least 10.5 cN/Tex.

The new invention allows obtaining fabrics manufactured with yarns produced with recycled fibers with optimum characteristics in terms of tensile strength and tear strength, as well as an improved abrasion strength, prolonging the service life of the product, with a wide range of colors and ensuring that said fabrics can be certified under the standards EN ISO 11612:2015 Fabrics and materials for protective clothing against heat and flame and/or EN ISO 11611:2015 Protective clothing for use in welding and allied processes, with said fabrics furthermore complying with the European directive and regulations required to market textile garments that are manufactured with fabrics containing at least 20% of recycled materials, and these materials can in turn be recovered, reprocessed, and used to make fabrics again, preferably for the same application at the end of their life cycle.

### PREFERRED EMBODIMENT OF THE INVENTION

In a preferred, non-limiting embodiment of the invention, the textile material is made up of yarns which are formed by a continuous filament of polyamide with a fiber count of 50 dtex (therefore comprised between 22 dtex and 440 dtex) and with a breaking strength of 22 cN/Tex (and therefore comprised between 5 cN/Tex and 75 cN/Tex), the surface of which is covered with recycled fibers or yarns with recycled fibers the composition of which having at least 20% of recycled fibers which are mixed with virgin fibers with fireproof, fire-resistant, and flame-retardant properties. Preferably, the recycled fibers which the yarns contain originate from the recovery or recycling of pre-consumer and/or post-consumer textile materials.

As demonstrated by means of the tests performed that are shown below, the yarns forming the textile material of the present invention offer a tenacity greater than 10.5 cN/Tex.

The analysis carried out for different yarn fiber counts with the following compositions is show below in Table 1:
Samples 1, 3, and 5 correspond to yarns with a mixed composition of virgin fibers, whereas samples 2, 4, and 6 correspond to yarns with a mixed composition of 80% virgin fibers and 20% recycled fibers.

For the correct interpretation of the parameters listed in the following table, the following definitions must be taken into account:
- Fiber count: The number of yarn expressed in Metric Number (MN) and TEX number.
- Ply number: The number of plies in the yarn, 1-ply yarn or 2-ply yarn.
- Composition: The composition of fibers in the resulting yarn.
- Uster: Measurement of yarn regularity, a higher value indicates greater irregularity.
- Fineness: The fine parts of the yarn, the more the fine parts the greater the irregularity of the yarn.
- Thickness: The thick parts of the yarn, the more the thick parts the greater the irregularity of the yarn.
- Force (expressed in cN): The breaking strength of the yarn.
- Tenacity (expressed in cN/Tex): The breaking strength of the yarn based on yarn number or fiber count.

**Table 1**

| SAMPLE | FIBER COUNT | | | | | PARTS | | | | |
|---|---|---|---|---|---|---|---|---|---|---|
| | MN | TEX | No. OF PLIES | COMPOSITION | USTER | FINENESS | THICKNESS | FORCE Cn | TENACITY cN/Tex | ELAST.% |
| 1 | 45 | 22.2 | 1 | 55% MODACRYLIC | 11.0 | 550 | 250 | 230 | 10.20 | 7.60 |
| | | | | 45% COMBED COTTON | | | | | | |
| 2 | 45 | 22.2 | 1 | 45% MODACRYLIC | 14.0 | 2.800 | 1.100 | 190 | 8.50 | 6.80 |
| | | | | 35% COMBED COTTON | | | | | | |
| | | | | 20% RECYCLED | | | | | | |
| 3 | 38 | 26.3 | 1 | 60% MODACRYLIC | 12.0 | 850 | 1.020 | 310 | 11.50 | 9.20 |
| | | | | 40% COMBED COTTON | | | | | | |
| 4 | 38 | 26.3 | 1 | 50% MODACRYLIC | 15.0 | 1.950 | 2.050 | 257 | 9.80 | 7.01 |
| | | | | 30% COMBED COTTON | | | | | | |
| | | | | 20% RECYCLED | | | | | | |
| 5 | 45 | 22.2 | 2 | 55% MODACRYLIC | 9.2 | 530 | 240 | 514 | 10.60 | 11.40 |
| | | | | 45% COMBED COTTON | | | | | | |
| 6 | 45 | 22,2 | 2 | 45% MODACRYLIC | 11,2 | 1.800 | 980 | 435 | 9,80 | 9,50 |
| | | | | 35% COMBED COTTON | | | | | | |
| | | | | 20% RECYCLED | | | | | | |

In conclusion, it should be mentioned that when comparing the behavior of a yarn with virgin mixtures (samples 1, 3, and 5) to yarn with virgin mixtures and recycled mixtures (samples 2, 4, and 6), it is observed that in yarns with recycled mixtures:
- The USTER increases, and therefore the regularity of the yarn worsens. The term USTER refers to an analysis methodology which measures different characteristics parameters of the yarn.
- The fine parts and the thick parts of the yarn increase, particularly due to the waste fibers of the recycled composition.
- The tenacity thereof decreases by about 20%.
- The elasticity thereof decreases by 20%.

Therefore, the incorporation of recycled fibers in any of the analyzed cases above worsens the behavior of the yarn in question when compared with the same yarn that does not contain any percentage of recycled fibers.

Moreover, Table 2 shows the results obtained in the test performed for the different yarn fiber counts in accordance with the development of the present invention. In other words, the results shown correspond to yarns formed by a continuous filament of polyamide with a fiber count of 50 dtex (i.e., comprised between 22 dtex and 440 dtex) and with a breaking strength of 22 cN/Tex (i.e., comprised between 5 cN/Tex and 75 cN/Tex), the surface of which is covered with recycled fibers or yarns with recycled fibers the composition of which having at least 20% of recycled fibers which are mixed with virgin fibers with fireproof, fire-resistant, and flame-retardant properties.

**Table 2**

| Sample | FIBER COUNT | | | | | PARTS | | | | |
|---|---|---|---|---|---|---|---|---|---|---|
| | MN | TEX | No. OF PLIES | COMPOSITION | USTER | FINENESS | THICKNESS | FORCE Cn | TENACITY cN/Tex | ELAST.% |
| 7 | 45 | 22.2 | 1 | 45% MODACRYLIC | 13.0 | 2.500 | 1.250 | 322 | 14.50 | 12.00 |
| | | | | 15% COMBED COTTON | | | | | | |
| | | | | 20% RECYCLED | | | | | | |
| | | | | 20% POLYAMIDE | | | | | | |
| 8 | 45 | 22.2 | 2 | 45% MODACRYLIC | 10.5 | 1.550 | 855 | 732 | 16.50 | 16.00 |
| | | | | 15% COMBED COTTON | | | | | | |
| | | | | 20% RECYCLED | | | | | | |
| | | | | 20% POLYAMIDE | | | | | | |
| 9 | 38 | 26.3 | 1 | 45% MODACRYLIC | 15.0 | 2.010 | 2.320 | 339 | 12.90 | 10.50 |
| | | | | 15% COMBED COTTON | | | | | | |
| | | | | 20% RECYCLED | | | | | | |
| | | | | 20% POLYAMIDE | | | | | | |
| 10 | 38 | 26.3 | 2 | 45% MODACRYLIC | 12.5 | 1.500 | 2.100 | 710 | 13.50 | 12.00 |
| | | | | 15% COMBED COTTON | | | | | | |
| | | | | 20% RECYCLED | | | | | | |
| | | | | 20% POLYAMIDE | | | | | | |

Therefore, in accordance with the results shown in Table 2, any of the yarns in accordance with the embodiment of the present invention (samples 7 to 10), including a continuous filament with a fiber count of between 22 dtex and 500 dtex and with a breaking strength of between 5 cN/Tex and 75 cN/Tex, allows incorporating a percentage of at least 20% of recycled fibers and maintaining the tenacity of the yarn forming the textile material of the invention with a value greater than 10.5 cN/Tex.

Lastly, Tables 3 and 4 show the results of the experimental behavioral tests for the fireproof, fire-resistant, and flame-retardant textile material in accordance with two fabric samples (sample A and sample B)
Sample A: 2/1 twill fabric, Table 3
1-ply yarn: 45 Nm/1 = 14.50 cN/Tex, Elasticity 12%,
Composition: 44% Modacrylic, 15% Combed cotton, 20% Recycled, 20% Polyamide, 1% Antistatic, wherein the continuous filament corresponds to polyamide having a fiber count of 50 dtex and a breaking strength of 22 cN/Tex.
Weight: 175 g/m²
Sample B: 2/1 twill fabric, Table 4
2-ply yarn: 45 Nm/2 = 16.50 cN/Tex, Elasticity 16%
Composition: 44% Modacrylic, 15% Combed cotton, 20% Recycled, 20% Polyamide, 1% Antistatic, wherein the continuous filament corresponds to polyamide having a fiber count of 50 dtex and a breaking strength of 22 cN/Tex.
Weight: 260 g/m²

**Table 3**

| EN ISO Standard, EN ISO 11611 :2015 | | | | |
|---|---|---|---|---|
| Sample A | Example 1 test results | | | |
| Parameter | Test method | Standard requirement | Values obtained | Pass/fail |
| Tensile strength | EN ISO 13934-1 :2013 | 400 N (Class 1 and Class 2) | | Pass - Class 1 |
| | | Part 1: Determination of maximum force and elongation at maximum force - strip method | Warp: 860 N | |
| | | | Weft: 610 N | |
| Tear strength | EN ISO 13937-2:2000 | 20 N (Class 1 and Class 2) | | Pass |
| | | Part 2: Determination of maximum force by means of the tear method | Warp: 67 N | |
| | | | Weft: 65 N | |
| Flame protection | EN ISO 15025:2016 | a) Warp and weft direction test | a) Yes | Pass |
| | | b) Destruction by flame up to the upper or side edge | b) No | |
| | | c) Without post-combustion(s) | c) 0 s | |
| | | d) Without post-incandescence(s) | d) 0 s | |
| | | e) Release of residues | e) No | |
| | | f) Without hole formation | f) No | |
| Electrostatic properties | EN ISO 1149-3:2004 | t50 < 4s or > 0.2 | t50 < 0.01 - s 0.79 | Pass |
| Fabric pretreatment | ISO 6330:2012 | Maximum shrinkage +/-3% | 2% | Pass |
| | | | | |

**Table 4**

| Table 1. EN ISO standard, EN ISO 11611:2015 | | | | |
|---|---|---|---|---|
| Sample B | Example 2 test results | | | |
| Parameter | Test method | Standard requirement | Values obtained | Pass/fail |
| Tensile strength | EN ISO 13934-1 :2013 | 400 N *(Class 1 and Class 2*) | | Pass - Class 1 |
| | | Part 1: Determination of maximum force and elongation at maximum force - strip method | Warp: 1300 N | |
| | | | Weft: 880 N | |
| Tear strength | EN ISO 13937-2:2000 | 20 N (Class 1 and Class 2) Part 2: Determination of maximum force by means of the tear method | Warp: 39 N | Pass |
| | | | Weft: 30 N | |
| Flame protection | EN ISO 15025:2016 | a) Warp and weft direction test | a) Yes | Pass |
| | | b) Destruction by flame up to the upper or side edge | b) No | |
| | | c) Without post-combustion(s) | c) 0 s | |
| | | d) Without post-incandescence(s) | d) 0 s | |
| | | e) Release of residues | e) No | |
| | | f) Without hole formation | f) No | |
| Electrostatic properties | EN ISO 1149-3:2004 | t50 < 4s or > 0.2 | t50 < 0.01 - s 0.79 | Pass |
| Fabric pretreatment | ISO 6330:2012 | Maximum shrinkage +/-3% | 2% | Pass |
| High-visibility fabrics and materials | EN ISO 20471 | Xenotest X and Y coordinate determination after 25 4N + C washing cvcles | Pass | Pass |
| | | | | |

It can be concluded from Tables 3 and 4 that both fabrics (sample A and sample B), which are made using the yarns of the invention, exceed the values required by the standard EN ISO 11611:2015 and therefore the standard EN ISO 13934-1:2013 Tensile strength, and the standard EN ISO 13937-2:2000 Tear strength.

The resulting yarns forming the textile material of the invention (sample A and sample B) have a tenacity greater than 10.5 cN/Tex and an LOI (Limiting Oxygen Index) greater than 26.

Therefore, sample A and sample B made in accordance with the textile material of the invention and with a percentage of 20% of recycled fibers, allow offering a textile material that complies with the standard EN ISO 11611:2015.

## Claims

1. A fireproof, fire-resistant, and flame-retardant textile material, which is formed by yarns containing recycled fibers originating from a textile material, **characterized in that** the yarns are formed by a continuous filament with a fiber count of between 22 dtex and 440 dtex and with a breaking strength of between 5 cN/Tex and 75 cN/Tex, the surface of which is covered with recycled fibers or yarns with recycled fibers, wherein the composition of the yarns of the fireproof textile material contains at least 20% of recycled fibers which are mixed with virgin fibers, wherein at least one of these fibers has fireproof, fire-resistant, and flame-retardant properties, such that the yarns constituting the textile material has a tenacity of at least 10.5 cN/Tex.

2. The textile material according to claim 1, **characterized in that** the mixture of fibers externally covering each continuous filament is made up of virgin fibers and recycled fibers, of natural, artificial, and/or synthetic origin with fireproof or flame-retardant properties.

3. The textile material according to claim 2, **characterized in that** the fibers covering the surface of the continuous filament are a mixture of recycled fibers and virgin fibers selected from: modacrylic, meta-aramid, para-aramid, polyamide-imide, polyacrylate, polyacrylonitrile, PBI, PBO, fire-resistant viscose, fire-resistant modal, carbon, preox, chlorinated, wool, cotton, lyocell, polyamide, polyester, regenerated cellulose, and recycled cellulose fibers.

4. The textile material according to any of the preceding claims, **characterized in that** the virgin fibers externally covering each continuous filament are cut with a length of between 38 mm and 55 mm.

5. The textile material according to claim 1, **characterized in that** the yarns have an LOI (Limiting Oxygen Index) of between 20 and 50.

6. The textile material according to claim 1, **characterized in that** the continuous filament of the yarn has a composition selected from: para-aramids, meta-aramids, polyamides, polyesters, polyethylene, polypropylene, PBO, elastomultiester, elastanes, artificial celluloses.

7. The textile material according to claim 6, **characterized in that** the continuous filament of the yarn is parallel, textured, twisted, assembled, and/or braided, and can be elastic, rigid, or a recycled copolymer.

8. The textile material according to claim 1, **characterized in that** the yarn has a number of turns per meter of yarn (twist per meter) in accordance with the twist constant between values of 75 kt and 150 kt.

9. The textile material according to claim 1, **characterized in that** the recycled fibers which the yarns contain originate from the recovery or recycling of pre-consumer and/or post-consumer textile materials.

10. The textile material according to the preceding claims, **characterized in that** it is obtained as a woven fabric, preferably with weaves, 3/1, 2/1 twill, 1/1, 2/1, 2/2 taffeta, sateen, double fabrics, ripstop.

11. The textile material according to any of claims 1 to 9, **characterized in that** it is obtained as a circular-knitted, woven, keten, or multiaxial fabric.

12. The textile material according to any of the preceding claims, **characterized in that** the covering of the continuous filament is arranged with a single helical cover or a double helical cover.
